# EUROPEAN PATENT APPLICATION

(11) **EP 2 138 936 A1**
(43) Date of publication of application: **30.12.2009**
(21) Application number: 08011723.7
(22) Date of filing: 27.06.2008
(51) Int. Cl.: G06F 11/36

(54) **A method for testing a system and a corresponding testing system**

(71) Applicant: Siemens Aktiengesellschaft, 80333 München (DE)
(72) Inventor: Ndem, Guy Collins, 81739 München (DE)

(57) **Abstract**

The present invention refers to testing of a system, wherein said system comprises at least one component, which is configured to perform at least one task on request. The testing of the system according to the present invention is performed by parsing implementation of said system with regard to declaration of said component and said task; transmitting a request for executing said task to said system at run time of said system; receiving a result provided by said executing of said task by said system; and checking said system by evaluating the received result.

## Description

The present invention refers to ensuring quality of products and to secure operating of products, wherein the products are based or operated by a (software) system. In particular, this is enabled by providing a method and/or a testing system for testing said (software) system, which comprises at least one component configured to perform at least one task on request. Within this scope, the present invention refers to a dynamic testing of said system. Further, the present invention refers to a computer program product comprising a code, wherein the code is configured to implement the above method. Further, the present invention refers to a data carrier comprising said computer program product. Thus, according to the present invention said method and/or said testing system are used for secure operation of a product operated by said system.

### BACKGROUND OF THE INVENTION

For many organizations the quality of products (e.g. software systems) plays an ever more important role. Increasingly, more measures are being seized, in order to achieve this higher quality. Despite encouraging results using different approaches for quality assurance, the industry of information technology still has a long way to go with regard of development of error free software. The development of software systems is still a difficult and challenging task, wherein correctness of the software systems is hardly to be mastered in the foreseeable future. Causes for errors are manifold and difficult to predict. Since Time-to-Market, competition, globalization and Quality of Service, including the quality of software systems, has become an important survival factor for many companies, the need for appropriate test processes and systems is rising. The general V-Model of software development describes testing as a process, with regard to which care has to be taken before, while and after realizing or implementing of a software product.

When considering securing of quality of products by testing processes or systems, one of the most challenging research areas within this scope is testing of distributed systems (or server-side technologies). Such systems become ever more important in daily life and are used with regard to various application areas, e.g., for business (e.g. ECommerce, Online-banking), for administration (e.g. E-Government) etc. In order to provide complex distributed applications, high costs of development and an extensive know-how are necessary.

This circumstance is often improved by use of components supporting and/or enabling implementation of distributes systems. In particular, Enterprise JavaBeans (EJB), for example, enable provision of such components when implementing distributed systems. The applications developed using the EJB specifications are platform-independent and also implementation-independent. EJB combines server-side components with distributed object technologies, asynchronous messaging, and Web services to simplify application development. It automatically manages the most complex aspects of enterprise computing, such as object brokering, transaction management, security, resource pooling, scalability, portability, and more.

To simplify matters, the present invention will be considered in following with regard to use of EJB and Java as programming language. However, the present invention is not limited to use of EJB and/or to testing of distributed systems only. According to the present invention, several software based systems can be tested, independently of language or concepts used for implementation of these systems.

When considering known systems or technologies for testing software, Mock EJB, IBM WebSphere, and Jakarta Cactus are prominent representatives.

With Mock objects (or "mocks") a technology is provided, which enables replacing of complex or difficult-to-control runtime components of a software system by lightweight, controllable versions, which are more amendable to a rapid unit test process. The idea of mock objects is to allow a unit test to replace part of the normal runtime environment with a specially written replacement, which implements the same interface as the regular component but can be easily controlled by the unit test code. Mock EJB is a recent addition to the mock objects landscape, providing mock implementations of many of J2EE (Java Platform, Enterprise Edition) interfaces.

Mock EJB is an EJB testing framework that a number of existing ideas and technologies that give the EJB developer a testing framework for easy unit testing of EJBs, both inside and outside the EJB container. In essence, Mock EJB provides mock object implementations of most J2EE interfaces required by an EJB. The provided mock container is a plain Java object and allows EJBs to be tested as plain Java objects, outside of the traditional container of a J2EE application server. However, Mock EJB can be integrated within a Cactus server-side testing framework and can provide a unit test environment inside the application server, if required.

IBM WebSphere is an integrated development environment (IDE) for developing enterprise solutions. WebSphere generates JUnit tests for EJB application developers using the test patterns for Enterprise JavaBeans. These test patterns include:
1. EJB lifecycle test pattern, which is used to create test for verifying the lifecycle method of an EJB and consist of a lifecycle test pattern for stateless session beans, lifecycle test pattern for stateful session beans, lifecycle test pattern entity beans with container-manager or bean-managed persistence.
2. EJB business logic test pattern, which is used to create test for verifying business logic. Business logic is usually implemented in session beans, although entity beans can sometimes contain business logic.
3. EJB session facade test pattern, which is used to create test for verifying the implementation of the Session Facade design pattern. This design pattern is used to provide a higher-level business logic interface, to hide the complexity of the application from the client, and to improve performance. The session facade design pattern is the EJB version of the well-known J2SE (Java Platform, Standard Edition) facade pattern. The session facade test pattern is often used to test a session bean that calls a local entity bean. The session facade test pattern generates tests for the session bean and for those methods in a subsystem (usually an entity bean) that are called by the session facade.

In order to generate JUnit test using WebSphere, the system to be tested has to available as a WebSphere project within the IDE. The wizard generates a JUnit test behavior script, a test suite, and test data tables (in a database) for storing test data. Test data are maintained in test data tables. When creating a test, a test data table is created for each test case. The test data table provides a way to enter and visualize test data, which is used when the test is run. Test data tables enable a data-driven testing, in which several sets of data with the same test behaviour are provided, allowing creating of tests with all possible ranges of data.

Cactus is a simple test framework for unit testing server-side java code. The intent of Cactus is to lower the cost of writing tests for server-side code. It uses JUnit and extends it. Cactus implements an in-container strategy, meaning that tests are executed inside the container. Cactus is not a JUnit test generator framework; it provides an API that eases the test generation process and just can be seen as a JUnit extension.

A disadvantage of the known testing processes or systems described above is that operational sequences of implementation of a system/application to be tested (i.e., the concrete source code) have to be provided in order to generate test cases, both tests and system must deployed on the corresponding system/application server. Further, no portability of test cases is possible with the testing techniques explained above. Additionally, no support for use of different test specification languages is provided with the testing techniques explained above.

### SUMMARY OF THE INVENTION

Object of the present invention is ensuring quality of products by provision of an improved testing of a system, wherein detailed knowledge of operational sequences of implementation of a system/application (i.e., the concrete source code) is not mandatory when performing the testing of the system.

This object is achieved by a method for testing a system comprising features according to claim 1, a testing system comprising features according to claim 11, a computer program product comprising features according to claim 21, a data carrier comprising features according to claim 23, use of the method comprising features according to claim 24, and/or use of the testing system comprising features according to claim 25.

Further embodiments of the present invention are provided with the corresponding dependent claims.

The object of the present invention is achieved by a method for testing a system, wherein said system comprises at least one component, which is configured to perform at least one task on request, said method comprising:
- parsing implementation of said system with regard to declaration of said component and said task;
- transmitting a request for executing said task to said system at run time of said system;
- receiving a result provided by said executing of said task by said system; and
- checking said system by evaluating the received result.

Here, in said system to be tested a client view can be provided to allow access and/or service requests to said component of said system, thus, also said request for executing said task. With the testing method a behaviour of a client is provided or simulated with regard to said component. In this way, access to services and, thus, performance of tasks provided by said component within said system to be tested becomes available.

According to an embodiment of the present invention, said testing method comprises a mapping of said declaration of said component and of said task to a corresponding declaration of said component and of said task in a test specification language. According to the present invention, each appropriate test specification language can be used.

According to an embodiment of the present invention, said mapping is performed by use of mapping rules. The mapping rules can be predefined with regard to said test specification language. Further, they are predefined with regard to language used for implementation of said system to be tested.

According to an embodiment of the present invention, said method comprises a generating of a call of said task in said test specification language by use of said declaration of said component and of said task mapped into said test specification language.

According to an embodiment of the present invention, said method comprises a decoding of said call of said task into language of implementation of said system.

According to a further embodiment of the present invention, said request for executing said task comprises said call of said task decoded into said language of implementation of said system.

According to an embodiment of the present invention, said method comprises handling an exception raised by said system when executing said task.

According to an embodiment of the present invention, said system is run on a computing entity, and wherein said request is transmitted to said computing entity. Thus, the testing method and said system can be performed or run on different computing entities.

According to an embodiment of the present invention, said component represents a component configured to enable distributed applications.

According to a further embodiment of the present invention, said component is an Enterprise JavaBeans component.

Thus, the present invention provides a dynamic and generic way also of testing EJB components. In this way, an effective testing of distributed systems being a challenging task, as described above, becomes possible.

The object of the present invention is achieved also by s testing system configured to test a second system, wherein said second system comprises at least one component, which is configured to perform at least one task on request, said testing system comprising:
- a parser configured to parse implementation of said second system with regard to declaration of said component and said task;
- a transmitter configured to transmit a request for executing said task to said second system at run time of said system;
- a receiver configured to receive a result provided by said executing of said task by said second system; and
- a checker configured to check said second system by evaluating the received result.

As mentioned above, in said second system, which has to be tested, a client view can be provided to allow access and/or service requests to said component of said second system, thus, also said request for executing said task. With the testing system a behaviour of a client is provided or simulated with regard to said component. In this way, access to services and, thus, performance of tasks provided by said component within said second system, which has to be tested, becomes available.

According to an embodiment of the present invention, said testing system comprises a mapper configured to perform a mapping of said declaration of said component and of said task to a corresponding declaration of said component and of said task in a test specification language, wherein each appropriate test specification language can be used.

According to an embodiment of the present invention, said mapper is configured to perform said mapping by use of mapping rules. Here, said mapping rules may be predetermined with regard to said test specification language. Further, they are predetermined with regard to language of implementation of said second system.

According to an embodiment of the present invention, said testing system comprises a generator configured to generate of a call of said task in said test specification language by use of said declaration of said component and of said task mapped into said test specification language.

According to an embodiment of the present invention, said testing system comprises a decoder configured to decode said call of said task into language of implementation of said second system.

According to a further embodiment of the present invention, said request for executing said task comprises said call of said task decoded into said language of implementation of said second system.

According to an embodiment of the present invention, said testing system is configured to handle an exception raised by said second system when executing said task.

According to an embodiment of the present invention, said second system is run on a computing entity, and said request is transmitted to said computing entity.

According to an embodiment of the present invention, said component represents a component configured to enable distributed applications.

According to an embodiment of the present invention, said component is an Enterprise JavaBeans component.

Thus, the present invention provides a testing system enabling a dynamic and generic way also of testing EJB components. In this way, an effective testing of distributed systems being a challenging task, as described above, becomes possible when using the testing system according to the present invention.

Further, the testing system is configured to perform steps of the testing method sketched above and explained in more detail bellow, wherein the testing method, in turn, comprises or enables performance of steps enabled by the corresponding components and by the corresponding configuration of the testing system.

The object of the present invention is achieved also by a computer program product comprising a code, which is configured to implement the testing method sketched above and explained in more detail bellow. Here, said computer program product can be comprised in a data carrier.

Furtner, the object of the present invention is achieved also by a data carrier comprising said computer program product.

Additionally, the object of the present invention is achieved also by use of the method, sketched above and explained in more detail bellow, and/or by use of the testing system, sketched above and explained in more detail bellow, for secure operation of a product operated by said system.

According to the present invention, an effective dynamic and generic testing of systems, in particular, of software based systems is enabled, wherein no analysis and/or tracking of operational sequences of the actual implementation of the system to be tested is necessary. This is advantageous as often the program code comprising the actual operational sequences is not available. Here, executable files with corresponding object and/or method definitions are available due to intention of developers of systems to keep the actual implementation as a property secure. Further, also if the corresponding program code comprising the operational sequences, which define the implementation of the system to be tested, is provided, the analysis and/or tracing of these sequences is a challenging and time consuming task.

Further, according to the present invention a generic solution for testing EJB components dynamically is provided. Thus, an effective way of testing dynamic systems, in particular, systems using EJB is enabled by the present invention.

Additionally, as more and more products (e.g., devices, systems, entities, and so on) are operated or based on software, the present invention ensures a secure operation of these products. There, always a possibility of having a hidden and undetected fault in said software. Such faults become visible only, when using the corresponding product, thus, when the corresponding software or system is run. In such cases, the hidden and undetected fault will cause misbehave of the corresponding system and of the corresponding product. In the worst case, damages of the corresponding system and of the corresponding product can be caused. In cases, the corresponding system and the corresponding product have fulfil some security requirements, damages of the environment the product and the system are used become possible. Thus, by use of the present system, detection of such hidden and undetected faults and provision of secure operation of corresponding products, systems is enabled.

### BRIEF DESCRIPTION OF THE DRAWINGS

The present invention will be more clearly understood from the following description of embodiments of the present invention read in conjunction with the attached drawings, in which:
Fig. 1 presents a block diagram visualizing testing of a system according to an embodiment of the present invention;
Fig. 2 presents a block diagram visualizing testing of a system according to a further embodiment of the present invention.
Fig. 3 presents exemplary derivated types provided in Java;
Fig. 4 presents an example of a mapping of some variable declarations provided in Java into corresponding declarations in TTCN-3;
Fig. 5 presents an example of a mapping of some primitive types provided in Java into corresponding primitive types in TTCN-3;
Fig. 6 presents a testing of a Bookstore application according to an embodiment of the present invention; and
Fig. 7 presents results of the testing of the Bookstore application according to said embodiment of the present invention.

### DESCRIPTION OF THE PREFERRED EMBODIMENTS

As already mentioned above, to simplify matters, the present invention will be considered exemplary in following with regard to use of Enterprise JavaBeans (EJB) and Java as programming language used for implementing of the system to be tested.

A success is mostly combined with challenges; therefore the undisputed success of EJB opens a huge amount of challenges, on how the EJB based systems (applications) could be tested in order to insure the correctness of the system making use of EJB. The EJB standard is thus an architectural conception, which is developed on basis of distributed objects. Therefore, e.g. client, server, and/or the database can be run on different computers, without having a conceptual meaning for the system using the EJB. The distribution enables a simple scaling and location independence of the system and, thus, a large flexibility with regard to operation and performance. Due to this flexibility, several approaches for testing systems based on EJB, can be defined - based on testing of the system and/or components. Unlike the system directed testing, when testing EJB, where the application is completely well integrated and tested against the specification, the component directed testing reserves more complications, since the application is designed to be run on a server. A component can only be tested in a context of an EJB container, and a unit test of an EJB component in a container located on an application server is not practical for the following reasons:
- a deployment of a single component takes too long;
- dependencies and states of components need to be considered; and/or
   a component test environment has to be developed.

The present invention provides a dynamic and generic way of testing EJB components. Further, use of different test specification languages (e.g. JUnit or TTCN-3) is enabled.

According to the present embodiment, based on present EJB standard, a mapping mechanism from EJB elements to a test specification language (TSL) is specified. Here, data and/or interfaces definitions of EJB components are converted into TSL artifacts. By this transformation, an access to components of the system to be tested becomes possible.

Furthermore, the presen embodiment enables generation of executable tests from EJB/Java applications automatically. The following examples include addition of concrete data, timing, or default behaviors.

Much of the EJB's power and benefit comes from standardized runtime environment and services, which an EJB container provides. However, a testing of applications or systems using EJB is a difficult and challenging task. Because of the reliance of EJBs on containers, EJBs can not run outside of these containers. This is often a cause for problems rising when a system, which is based on EJBs, has to be tested. The tester spends more time to think, how to access the container, than to think, how to test the application itself.

By this embodiment of the present invention, a generic solution is presented, which enables a generic and dynamic testing of EJB components dynamically without having to provide the system implementation sources.

The EJB architecture specifies a client view, which allows Java clients to contact the container through Java RMI over IIOP. This means that the tester of a system making use of EJB must behave like its client and that so services running inside the container on the server can be accessed. Before requesting services to the container, it is useful to know, which functionalities are provided by the EJB application. This knowledge can be obtained by loading and analyzing the implementation of the system to be tested. The testing system, configured to test EJB applications/systems, can be thought of conceptually as set of interacting testing components, wherein each testing component implements a specific functionality of the testing system. These testing components may perform, for example, the following functionalities:
- loading and analyzing of an implementation of the system to be tested;
- generating of Abstract test suites (ATSs) by use of the implementation of the system to be tested;
- converting of Java instances into TSL values and reciprocally;
- managing of creation of RMI stubs and skeleton;
- requesting of the execution of tasks to the container of the system to be tested; and/or
- handling of exceptions raised by the system to be tested at runtime.

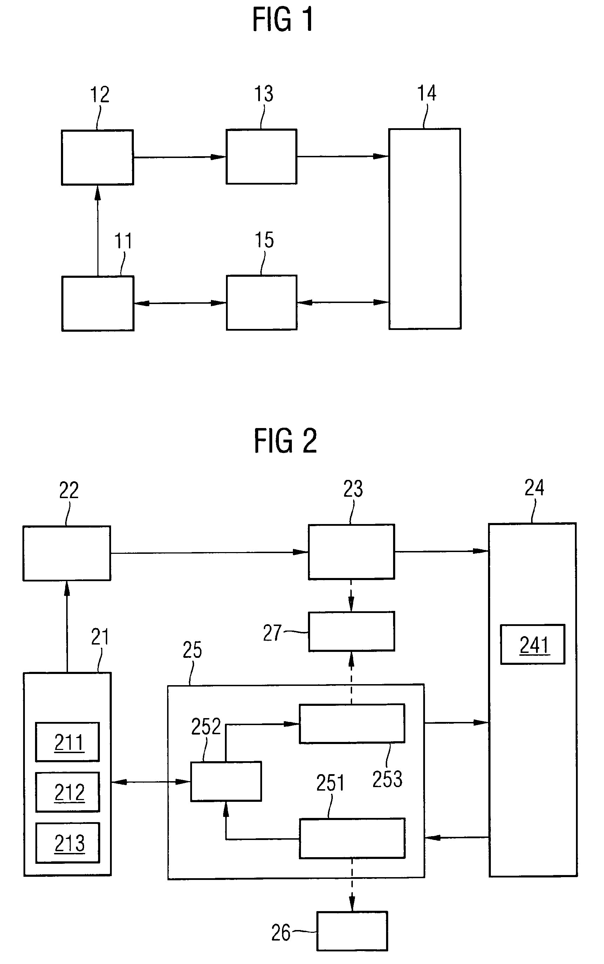

The concept and the architecture of a testing system according to an embodiment of the present invention are illustrated exemplary in Fig. 1.

The component 11 comprises at least a part of the system to be tested and at least one EJB component performing tasks on request in said system.

The implementation of the system comprised in component 11 is loaded by a loader 12, provided by the testing system. Here, the implementation of the system to be tested is provided, for example, as jarFiles, zipFiles, and/or classFolders. In following, the loader 12 investigates or analyzes the implementation of the system to be tested and loads each element of the implementation, which comprises also EJB components with their functionalities or tasks, into the Java virtual machine (JVM).

The generator 13, provided by the testing system, comprises a parser for parsing the loaded elements. In particular, the parser parses also EJB components and their functionalities or tasks. In particular, the parsing is performed with regard to declarations of the loaded elements (and, thus of the EJB components and their functionalities). Further, the generator 13 comprises also a mapper, which uses mapping rules to generate test cases in a given test specification language. The generated test cases comprise task calls for tasks performed by EJB components detected by the loader 12. These test cases are provided to a container 14, keeping them for testing purpose.

The component 15 of the testing system represents a bridge between the testing space 14 and the system to be tested 11 and is used at run time of the system to be tested 11. The bridge 15 assures communication between the test specification language (TSL) container 14 and the system to be tested 11, wherein the components 11, 14, and 15 may be run on the same or on different computing entities or devices (e.g., servers). The bridge component 15 also takes over the coding and decoding of data, and requests the execution of tasks (coming from the TSL) to the system to be tested 11. Thus, the bridge component 15 comprises a receiver for receiving a test case or a call for performing a task from the component 14; a decoder for decoding the test case or the call for performing a task from the test specification language to Java; a transmitter to transmit the decoded test case or the call for performing a task; and a receiver for receiving results of the performed task. The received results are then analyzed with regard to possible faults occurred during the performance of the corresponding task.

In order to make possible the communication between the testing components and the system, to be tested and comprising EJB components, and in order to support an adequate testing, definition of a set of mapping rules is necessary according to the present embodiment. Those transformation rules focus on the translation of type (on the Meta level) and structural (e.g., identifiers, methods, etc.) information comprised in Java class and definitions of interfaces. While the transformations rules affect the Meta level, the transformations are perform on model (instance) level. Thus, a communication protocol between Java and the TSL must be defined, if testing of EJB is intended to be performed. Therefore, the TSL can order the execution of tasks, which have to be taken over by the EJB system 11. I.e., the TSL component 14 sends requests to Java and reciprocally through the bridge component 15. The bridge component applies the transformation or mapping rules on the received information, so that they can be processed either by Java on EJB system side 11 or by the TSL side 14.

When considering the mapping task, mapping of identifiers or types can be performed, for example. The identifiers will be in most of mapping cases names of methods, variables, types, or packages. An adequate mapping of identifiers enable avoiding of clashing (e.g. with keywords) and collisions.

Mapping of types, in turn, enables ensuring of data exchange. Such data can be, for example, objects, parameters, or results, which need to be provided or analysed for test purposes.

In this way, generating and executing of tests using different test specification languages becomes possible. In following, the Test and Tabular Control Notation version 3 (TTCN-3) will be used exemplary as one of possible test specification languages.

Fig. 2 presents a block diagram visualizing testing of a system according to a further embodiment of the present invention, wherein the performance of the testing is adapted to use of the TTCN-3.

The system to be tested is provided by component 21, wherein the component 21 comprises also implementation data of the system 211, 212, 213, wherein said implementation data comprises according to the present embodiment jarFiles 211, zipFiles 212, and classFolders 213.

The loader 22 loads and analyzes the implementation data 211, 212, 213. The parser 23, in turn, parses declarations of elements (comprising also EJB components and their tasks). According to the present embodiment, the parser 23 performs also the functionality of a mapper. Thus, the parser 23 is also configured to map declarations of elements provided in Java into corresponding declarations in TTCN-3. Here, predefined mapping rules 27 can be used for mapping purposes. A transformer 24 analyzes declarations of elements (e.g., EJB components) and their functionalities both provided in TTCN-3 and generates at least one appropriate TTCN-3 file 241, comprising the EJB system specification and the associated test cases, wherein said test cases comprise calls of tasks to be tested.

According to the present embodiment, a test adapter 25 replaces the communication bridge 15 of Fig. 1. In the test adapter 25, a decoder 251 decodes the test cases comprising calls of tasks to be tested, wherein a decoding from TTCN-3 to Java is performed. Here, corresponding mapping rules 26 for mapping from TTCN-3 to Java can be used.

The decoded test cases with decoded calls of tasks are provided to an executor 252, which in turn transmits corresponding requests for performing the corresponding tasks to the component 21 comprising the system to be tested. Said tasks are performed during the runtime of the system to be tested. The executor 252 receives the results of the corresponding tasks and provides them to an encoder 253. The encoder 253 encodes them by mapping the results provided in Java into TTCN3. Also here, the mapping rules 27 can be used. The mapped results are evaluated with regard to possible faults occurred with regard to the performed task at the runtime of the system to be tested.

In following some examples of mapping will be considered. Here, Java and TTCH-3 mapping rules will be presented exemplary. Due to the huge amount of mapping rules being possible, in following, only a part of them will be shown.

Basic rules for mapping the identifiers:
1. A dot (".") is mapped to an underscore ("_").
2. An underscore ("_") is mapped to a double underscore ("_").
3. An existing underscore ("_") within identifiers, which are used to form, e.g., signature, component, group, test case, or port names, is mapped to "U005F" (the Unicode for the underscore).

Mapping of Java primitive data types to TTCN-3 data types is straight forward. It is necessary to map each Java primitive type to a new appropriate one in TTCN-3 in order to ensure their reconstruction in Java during the execution of tests. This notion introduces the JavaObject@TTCN-3 concept, which consists of transporting of Java Objects into TTCN-3 and manipulating them as well as in Java.

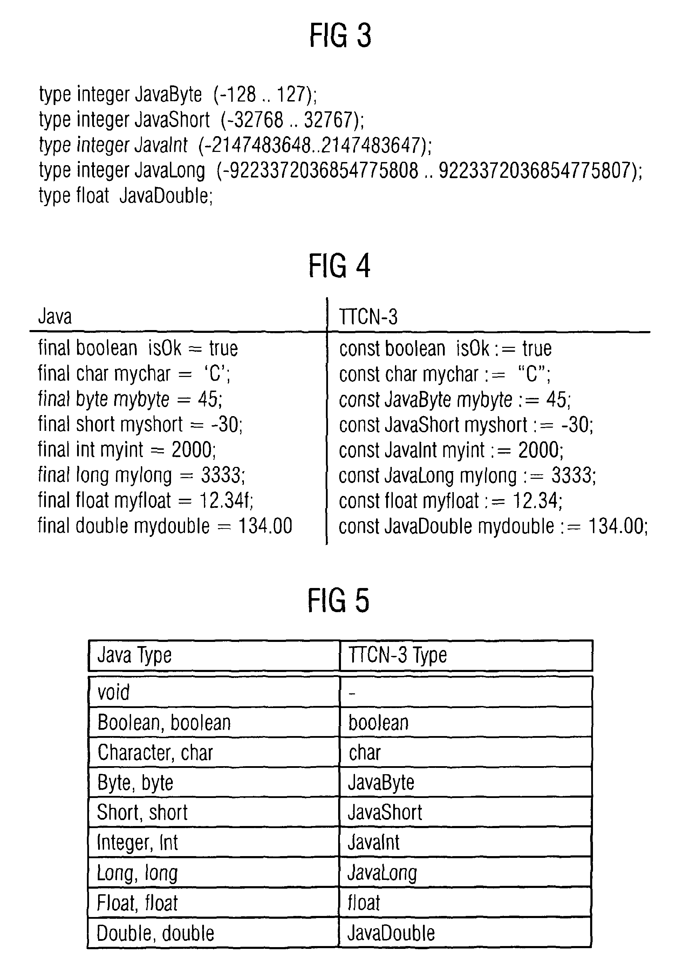

As regards the mapping, Fig. 3 presents exemplary derivated types provided in Java; Fig. 4 presents an example of a mapping of some variable declarations provided in Java into corresponding declarations in TTCN-3; and Fig. 5 presents an example of a mapping of some primitive types provided in Java into corresponding primitive types in TTCN-3.

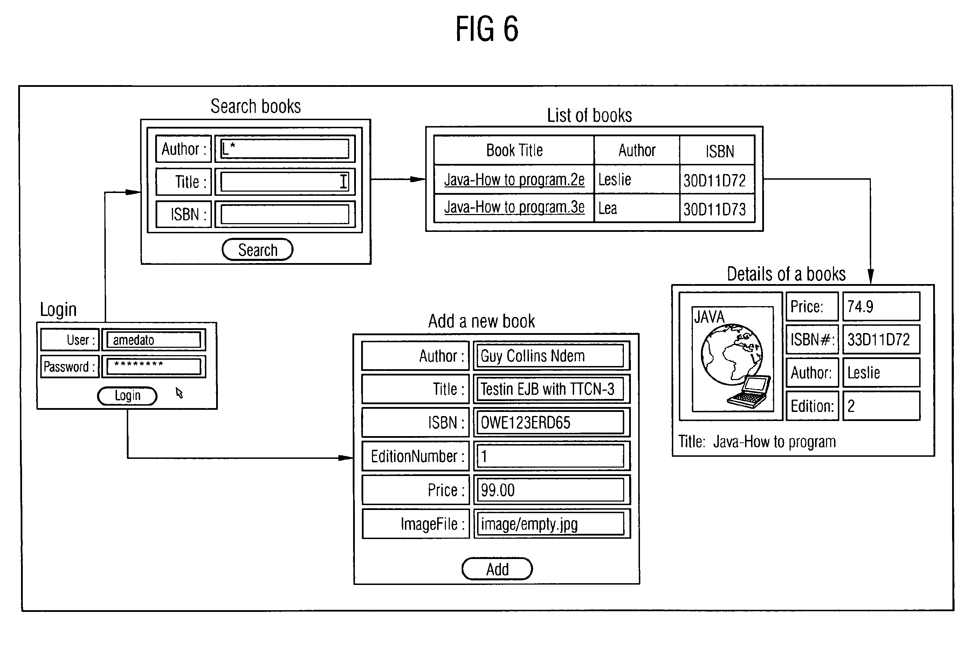

Fig. 6 presents a testing of a Bookstore application according to an embodiment of the present invention.

The bookstore application is based on the EJB technology. This application allows users to login and to search books stored in a database. Books can be searched, for example, by use of ISBN, author, or title. After a search action, a list of found books is shown to the user, and the user is allowed to select a book and to see more details with regard .to the selected book. In order to visualize, that the testing system and/or method can handle complex data types, the bookstore application was extended to provide several ways of visualizing books.

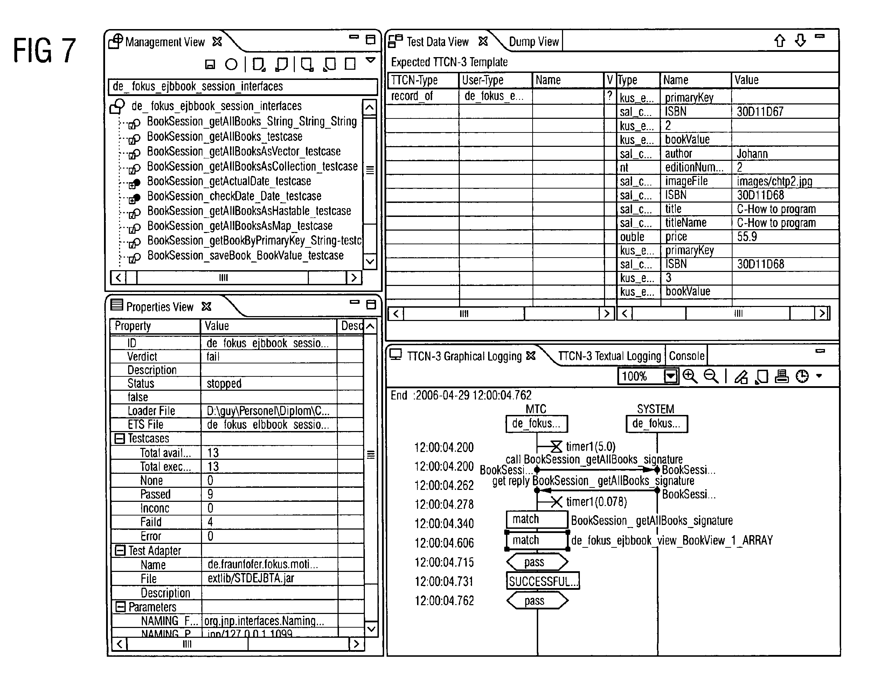

Fig. 7 presents results of the testing of the Bookstore application according to said embodiment of the present invention, wherein results provided by Bookstore application with regard to steps shown in Fig. 6 are visualized by Fig. 7. The presentation of results is provided by use of the TTWorkbench of TestingTech IST.

Thus, the present invention refers to testing of a system, wherein said system comprises at least one component, which is configured to perform at least one task on request. The testing of the system according to the present invention is performed by parsing implementation of said system with regard to declaration of said component and said task; transmitting a request for executing said task to said system at run time of said system; receiving a result provided by said executing of said task by said system; and checking said system by evaluating the received result.

It is noted that the present invention is not restricted to the above embodiments. In particular, various configurations of entities for testing a system according to the present invention may be provided. The embodiments presented above may, thus, vary within the scope of the attached claims in dependence of the environment or concrete system the operation of which is to be tested and in dependence of needs of the user working at testing of a system according to the present invention.

## Claims

1. A method for testing a system, wherein said system comprises at least one component, which is configured to perform at least one task on request, said method comprising:
- parsing implementation of said system with regard to declaration of said component and said task;
- transmitting a request for executing said task to said system at run time of said system;
- receiving a result provided by said executing of said task by said system; and
- checking said system by evaluating the received result.

2. The method according to claim 1, said method comprising a mapping of said declaration of said component and of said task to a corresponding declaration of said component and of said task in a test specification language.

3. The method according to claim 2, wherein said mapping is performed by use of mapping rules.

4. The method according to claim 2 or 3, said method comprising a generating of a call of said task in said test specification language by use of said declaration of said component and of said task mapped into said test specification language.

5. The method according to claim 4, said method comprising a decoding of said call of said task into language of implementation of said system.

6. The method according to claim 5, wherein said request for executing said task comprises said call of said task decoded into said language of implementation of said system.

7. The mathod according to any one of preceding claims, said method comprising handling an exception raised by said system when executing said task.

8. The method according to any one of preceding claims, wherein said system is run on a computing entity, and wherein said request is transmitted to said computing entity.

9. The method according to any one of preceding claims, wherein said component represents a component configured to enable distributed applications.

10. The method according to any one of preceding claims, wherein said component is an Enterprise JavaBeans component.

11. A testing system configured to test a second system, wherein said second system comprises at least one component, which is configured to perform at least one task on request, said testing system comprising:
- a parser configured to parse implementation of said second system with regard to declaration of said component and said task;
- a transmitter configured to transmit a request for executing said task to said second system at run time of said system;
- a receiver configured to receive a result provided by said executing of said task by said second system; and
- a checker configured to check said second system by evaluating the received result.

12. The testing system according to claim 11, said testing system comprising a mapper configured to perform a mapping of said declaration of said component and of said task to a corresponding declaration of said component and of said task in a test specification language.

13. The testing system according to claim 12, wherein said mapper is configured to perform said mapping by use of mapping rules.

14. The testing system according to claim 12 or 13, said testing system comprising a generator configured to generate a call of said task in said test specification language by use of said declaration of said component and of said task mapped into said test specification language.

15. The testing system according to claim 14, said testing system comprising a decoder configured to decode said call of said task into language of implementation of said second system.

16. The testing system according to claim 15, wherein said request for executing said task comprises said call of said task decoded into said language of implementation of said second system.

17. The testing system according to any one of preceding claims 11 - 16, said testing system being configured to handle an exception raised by said second system when executing said task.

18. The testing system according to any one of preceding claims 11 - 17, wherein said second system is run on a computing entity, and wherein said request is transmitted to said computing entity.

19. The testing system according to any one of preceding claims 1 - 18, wherein said component represents a component configured to enable distributed applications.

20. The testing system according to any one of preceding claims 1 - 19, wherein said component is an Enterprise JavaBeans component.

21. A computer program product comprising a code, said code being configured to implement a method according to any one of claims 1 - 10.

22. The computer program product according to claim 21, said computer program product being comprised in a data carrier.

23. A data carrier comprising a computer program product according to claim 21.

24. Use of the method according to any one of claims 1 - 10 for secure operation of a product operated by said system.

25. Use of the testing system according to any one of claims 11 - 20 for secure operation of a product operated by said second system.
